(19) Europäisches Patentamt
European Patent Office
Office européen des brevets

(11) EP 4 712 045 A1

(12) **EUROPEAN PATENT APPLICATION**
published in accordance with Art. 153(4) EPC

(43) Date of publication:
18.03.2026 Bulletin 2026/12

(51) International Patent Classification (IPC):
*G06V 10/774* (2022.01)   *G06T 17/20* (2006.01)

(21) Application number: 24802614.8

(22) Date of filing: 20.03.2024

(86) International application number:
PCT/CN2024/082639

(87) International publication number:
WO 2024/230326 (14.11.2024 Gazette 2024/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.05.2023 CN 202310518670

(71) Applicant: Jingdong Technology Information
Technology Co., Ltd.
Beijing 100176 (CN)

(72) Inventors:
• ZHAO, Shanshan
Beijing 100176 (CN)
• DUAN, Lunhao
Beijing 100176 (CN)

(74) Representative: Page White Farrer
Bedford House
21a John Street
London WC1N 2BF (GB)

(54) **THREE-DIMENSIONAL POINT CLOUD PROCESSING MODEL TRAINING METHOD AND SEMANTIC SEGMENTATION MODEL TRAINING METHOD, AND RELATED DEVICE**

(57) The present disclosure relates to the technical field of three-dimensional point cloud. Disclosed are a three-dimensional point cloud processing model training method and a semantic segmentation model training method, and a related device. The three-dimensional point cloud processing model training method comprises: processing three-dimensional point cloud data by using a three-dimensional point cloud processing model, so as to acquire information of points in the three-dimensional point cloud data; acquiring information of pixels in two-dimensional image data, wherein the two-dimensional image data and the three-dimensional point cloud data cover the same area; determining an alignment constraint loss of the three-dimensional point cloud data and the two-dimensional image data by using the information of the points and the information of the pixels; determining a classification loss of the three-dimensional point cloud processing model by using classification information, which is predicted by the three-dimensional point cloud processing model, of the points in the three-dimensional point cloud data and pre-marked scene classification information; and training the three-dimensional point cloud processing model by using the alignment constraint loss and the classification loss.

Process three-dimensional point cloud data using a three-dimensional point cloud processing model to acquire information of points in the three-dimensional point cloud data — S102

Acquire information of pixels in two-dimensional image data — S104

Determine an alignment constraint loss between the three-dimensional point cloud data and the two-dimensional image data using the information of the points and the information of the pixels — S106

Determine a classification loss of the three-dimensional point cloud processing model using classification information of the points in the three-dimensional point cloud data predicted by the three-dimensional point cloud processing model and pre-labeled scene classification information — S108

Train the three-dimensional point cloud processing model using the alignment constraint loss and the classification loss — S110

FIG. 1

**Description**

**CROSS-REFERENCE TO RELATED APPLICATIONS**

The present application is based on the application with a CN application number of 202310518670.1 and the filing date of May 09, 2023, and claims its priority. The disclosure of this CN application as a whole is incorporated into the present application herein by reference.

**TECHNICAL FIELD**

The present disclosure relates to the technical field of three-dimensional point cloud, in particular to a three-dimensional point cloud processing model training method and semantic segmentation model training method, and related device.

**BACKGROUND**

A three-dimensional point cloud refers to the spatial three-dimensional point information obtained by scanning devices such as LiDAR and depth cameras, which generally includes spatial three-dimensional position information, color information and intensity information. Semantic segmentation of three-dimensional point cloud refers to assigning a specific semantic label to each point in the point cloud, which is a key step in scene understanding and has been widely used in many fields such as robotics, augmented reality and autonomous driving. Therefore, three-dimensional point cloud semantic segmentation has always been a research hotspot in the field of computer vision.

In related technologies, the weak supervised point cloud semantic segmentation method based on scene classification supervision signals usually adopts the idea of point cloud category activation maps to generate pseudo-labels for each point, and this approach generates pseudo-labels according to point cloud data.

**SUMMARY**

According to a first aspect of some embodiments of the present disclosure, there is provided a training method of a three-dimensional point cloud processing model, comprising: processing three-dimensional point cloud data using a three-dimensional point cloud processing model to acquire information of points in the three-dimensional point cloud data; acquiring information of pixels in two-dimensional image data, wherein the two-dimensional image data and the three-dimensional point cloud data cover a same area; determining an alignment constraint loss between the three-dimensional point cloud data and the two-dimensional image data using the information of the points and the information of the pixels; determining a classification loss of the three-dimensional point cloud processing model using classification information of the points in the three-dimensional point cloud data predicted by the three-dimensional point cloud processing model and pre-labeled scene classification information; and training the three-dimensional point cloud processing model using the alignment constraint loss and the classification loss.

In some embodiments, the information of the points comprises at least one of classification information of the points or feature information of the points; and the information of the pixels comprises at least one of classification information of the pixels or feature information of the pixels.

In some embodiments, the determining the alignment constraint loss between the three-dimensional point cloud data and the two-dimensional image data using the information of the points and the information of the pixels comprises: determining a matching degree between the three-dimensional point cloud data and the two-dimensional image data using the information of the points and the information of the pixels; and determining the alignment constraint loss according to the matching degree.

In some embodiments, the matching degree comprises at least one of a matching degree of features between the points and the pixels, a matching degree of global features between the three-dimensional point cloud data and the two-dimensional image data, or a matching degree of semantic between the points and the pixels.

In some embodiments, the matching degree of features between the points and the pixels is determined according to a similarity between the points and corresponding pixels.

In some embodiments, in a case that the matching degree comprises the matching degree of features between the points and the pixels, the determining the alignment constraint loss according to the matching degree comprises: mapping features of the points and features of the pixels to a same dimension to obtain a first point cloud feature of each of the points and a first pixel feature of each of the pixels respectively; randomly acquiring a first number of points and pixels corresponding to the first number of points; for each of the first number of points, determining a contrastive learning loss between the point and a pixel corresponding to the point according to a similarity between the first point cloud feature of the point and the first pixel feature of the pixel corresponding to the point and a sum of similarities between the first point cloud feature of the point and the first pixel features of the pixels; and determining the alignment constraint loss according to a sum of contrastive learning losses of the first number of points.

In some embodiments, for each of the first number of points, the contrastive learning loss between the point and the pixel corresponding to the point is negatively correlated with the similarity between the first point cloud feature of the point and the first pixel feature of the pixel corresponding to the point, and positively correlated with the sum of the similarities between the first point cloud feature of the point and the first pixel features of the pixels.

In some embodiments, the matching degree of global features is determined according to a similarity between any two points in the three-dimensional point cloud data and a similarity between any two pixels in the two-dimensional image data.

In some embodiments, in a case that the matching degree comprises the matching degree of global features, the determining the alignment constraint loss according to the matching degree comprises: mapping features of the points and features of the pixels to a same dimension to respectively obtain a second point cloud feature of each of the points and a second pixel feature of each of the pixels; randomly acquiring a second number of points and pixels corresponding to the second number of the points; for any two points of the second number of points, determining first similarity information between second point cloud features of the two points and second similarity information between second pixel features of two pixels corresponding to the two points of a second number of pixels, and determining a similarity loss corresponding to the two points according to a difference between the first similarity information and the second similarity information; and determining the alignment constraint loss according to a sum of similarity losses of points in the three-dimensional point cloud data.

In some embodiments, the first similarity information and the second similarity information are similarity matrices.

In some embodiments, the matching degree of semantic is determined according to first classification information of each of the points and second classification information of each of the pixels.

In some embodiments, the second classification information is obtained by processing the each of the pixels using a two-dimensional image processing model, and in a case that the matching degree comprises the matching degree of semantic, the determining the alignment constraint loss according to the matching degree comprises: mapping the three-dimensional point cloud data and the two-dimensional image data to a same dimension ; processing the mapped three-dimensional point cloud data using the two-dimensional image processing model to obtain third classification information of the each of the points; and determining a semantic matching loss using the second classification information and the third classification information, and determining the alignment constraint loss according to the semantic matching loss.

In some embodiments, the alignment constraint loss is positively correlated with the second classification information and negatively correlated with the third classification information.

In some embodiments, the acquiring the information of the two-dimensional image data comprises: processing the two-dimensional image data using a two-dimensional image processing model to acquire the information of the two-dimensional image data.

In some embodiments, the determining the classification loss of the three-dimensional point cloud processing model using the classification information of the points in the three-dimensional point cloud data predicted by the three-dimensional point cloud processing model and the pre-labeled scene classification information comprises: determining a first classification loss according to the classification information of the points in the three-dimensional point cloud data predicted by the three-dimensional point cloud processing model and the pre-labeled scene classification information; determining a second classification loss according to the classification information of the pixels in the two-dimensional image data predicted by the two-dimensional image processing model and the scene classification information; and determining the classification loss of the three-dimensional point cloud processing model according to the first classification loss and the second classification loss.

In some embodiments, the first classification loss is determined according to a pooling processing result of the classification information of the three-dimensional point cloud data predicted by the three-dimensional point cloud processing model and the scene classification information; and the second classification loss is determined according to the classification information of the pixels in the two-dimensional image data predicted by the two-dimensional image processing model and the scene classification information.

In some embodiments, the three-dimensional point cloud processing model is trained using a weighted result of the alignment constraint loss and the classification loss.

In some embodiments, the three-dimensional point cloud processing model is implemented using a three-dimensional residual network.

In some embodiments, the two-dimensional image processing model is implemented using a two-dimensional residual network.

According to a second aspect of some embodiments of the present disclosure, there is provided a training method of a semantic segmentation model, comprising: predicting classification information in three-dimensional point cloud data to be processed using a three-dimensional point cloud processing model, wherein the three-dimensional point cloud processing model is trained using any of the foregoing training methods of the three-dimensional point cloud processing model; generating pseudo labels of points in the three-dimensional point cloud data to be processed according to the classification information; and training a semantic segmentation model of three-dimensional point cloud using the pseudo labels.

According to a third aspect of some embodiments of the present disclosure, there is provided a training device of a three-dimensional point cloud processing model, comprising: a first information acquisition module configured for processing three-dimensional point cloud data using a three-dimensional point cloud processing model to acquire information of points in the three-dimensional point cloud data; a second information acquisition module configured for acquiring information of pixels in two-dimensional image data, wherein the two-dimensional image data and the three-dimensional point cloud data cover a same area; an alignment constraint loss determination module configured for determining an alignment constraint loss between the three-dimensional point cloud data and the two-dimensional image data using the information of the points and the information of the pixels; a classification loss determination module configured for determining a classification loss of the three-dimensional point cloud processing model using classification information of the points in the three-dimensional point cloud data predicted by the three-dimensional point cloud processing model and pre-labeled scene classification information; and a three-dimensional point cloud processing model training module configured for training the three-dimensional point cloud processing model using the alignment constraint loss and the classification loss.

According to a fourth aspect of some embodiments of the present disclosure, there is provided a training device of a three-dimensional point cloud processing model, comprising a memory; and a processor coupled to the memory, the processor being configured to perform any one of the foregoing training methods of the three-dimensional point cloud processing model based on instructions stored in the memory.

According to a fifth aspect of some embodiments of the present disclosure, there is provided a training system of a semantic segmentation model, comprising: any of the foregoing training devices of a three-dimensional point cloud processing model; a prediction module configured for predicting classification information in three-dimensional point cloud data to be processed using the three-dimensional point cloud processing model; a generation module configured for generating pseudo labels of points in the three-dimensional point cloud data to be processed according to the classification information; and a semantic segmentation model training module configured for training a semantic segmentation model of three-dimensional point cloud using the pseudo labels.

According to a sixth aspect of some embodiments of the present disclosure, there is provided a computer-readable storage medium having stored thereon a computer program, which, when executed by a processor, implements any of the foregoing training methods of a three-dimensional point cloud processing model.

According to a sixth aspect of some embodiments of the present disclosure, there is provided a computer program, comprising: instructions which, when executed by a processor, cause the processor to perform any of the foregoing training methods of a three-dimensional point cloud processing model.

Other features and advantages of the present disclosure will become clear from the following detailed description of exemplary embodiments of the present disclosure with reference to the accompanying drawings.

## BRIEF DESCRIPTION OF THE DRAWINGS

In order to more clearly illustrate the embodiments or technical solutions in existing technologies of the present disclosure, a brief introduction will be given below for the drawings required to be used in the description of the embodiments or technical solutions in existing technologies. It is obvious that, the drawings illustrated as follows are merely some of the embodiments of the present disclosure. For an ordinary skilled in the art, other drawings can also be acquired according to such drawings without paying inventive efforts.

FIG. 1 shows a flow schematic diagram of a training method of a processing model according to some embodiments of the present disclosure.

FIG. 2 shows a flow schematic diagram of an alignment constraint loss determination method according to some embodiments of the present disclosure.

FIG. 3 shows a flow schematic diagram of an alignment constraint loss determination method according to other embodiments of the present disclosure.

FIG. 4 shows a flow schematic diagram of an alignment constraint loss determination method according to still other embodiments of the present disclosure.

FIG. 5 shows a flow schematic diagram of a classification loss determination method according to some embodiments of the present disclosure.

FIG. 6 shows a flow schematic diagram of a training method of a semantic segmentation model of a three-dimensional point cloud according to some embodiments of the present disclosure.

FIG. 7 shows a structural schematic diagram of a training device of a three-dimensional point cloud processing model according to some embodiments of the present disclosure.

FIG. 8 shows a schematic structural diagram of a training system of a semantic segmentation model according to some embodiments of the present disclosure.

FIG. 9 shows a structural schematic diagram of a training device of a three-dimensional point cloud processing model according to other embodiments of the present disclosure.

FIG. 10 shows a structural schematic diagram of a training device of a three-dimensional point cloud processing model according to still other embodiments of the present disclosure.

**DETAILED DESCRIPTION**

The technical solutions in the embodiments of the present disclosure will be clearly and completely described below with reference to the accompanying drawings in the embodiments of the present disclosure. Obviously, the described embodiments are only a part of the embodiments of the present disclosure instead of all of them. The following descriptions on at least one illustrative embodiment are actually illustrative, but shall not set any limitation on the present disclosure and its application or utilization. Based on the embodiments in the present disclosure, all other embodiments obtained by those ordinary skilled in the art without making creative work shall fall within the scope of protection of the present disclosure.

Unless otherwise illustrated, respective arrangements, mathematic expressions and values of the components and steps illustrated in these embodiments do not limit the scope of the present disclosure.

Meanwhile, it shall be understood that for ease of description, dimensions of respective parts shown in the drawings are not drawn according to actual proportional relationships.

Techniques, methods and devices that have already been known to ordinary skilled in the related art may not be discussed here in details, but under suitable circumstances, the techniques, methods and devices shall be deemed as parts of the description.

In all examples shown and discussed herein, any specific values should be interpreted as illustrative only and not as a limitation. Therefore, other examples of exemplary embodiments may have different values.

It should be noted that similar numbers and letters indicate similar items in the following drawings, so once an item is defined in one drawing, it does not need to be further discussed in subsequent drawings.

After analysis, it is found that the way of generating pseudo-labels based on point cloud category activation maps only considers the modality of point cloud data, and the inaccuracy of the generated pseudo-labels would make the semantic segmentation result of the three-dimensional point cloud inaccurate.

A technical problem to be solved by the embodiment of the present disclosure is how to improve the labeling accuracy of three-dimensional point cloud data.

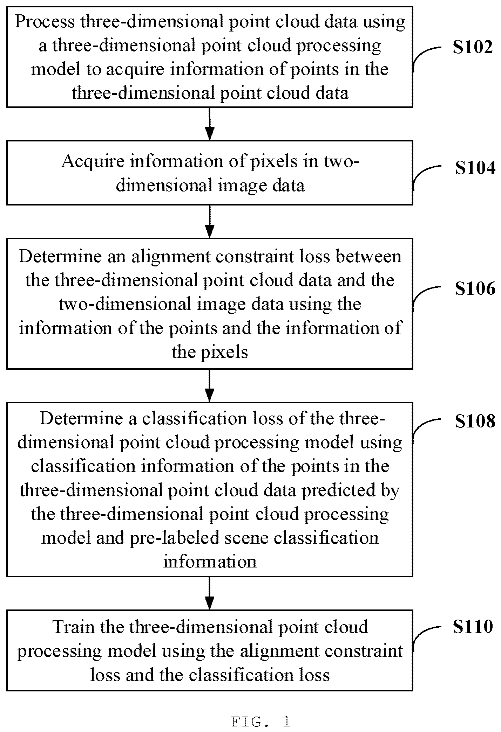

FIG. 1 shows a flow schematic diagram of a training method of a processing model according to some embodiments of the present disclosure. As shown in FIG. 1, the training method of the processing model of this embodiment includes steps S102~S110.

In step S102, three-dimensional point cloud data is processed using a three-dimensional point cloud processing model to acquire information of points in the three-dimensional point cloud data.

The three-dimensional point cloud data includes data of several points, and the data of each point can include position information and color information. In some embodiments, the three-dimensional point cloud data is represented by $\mathbf{P} \in \mathbb{R}^{N \times 6}$, where N represents the number of points and 6 represents six dimensions (three-dimensional color information and three-dimensional position information).

The three-dimensional point cloud processing model is used to classify each point in the three-dimensional point cloud data. For example, a probability that each point belongs to each category can be output, and then one or more categories to which the point belongs can be determined according to a probability threshold.

The three-dimensional point cloud processing model may also output features of each point. For example, an intermediate calculation result of the three-dimensional point cloud processing model can be output, and the output represents the features of points.

In some embodiments, the information of the points in the three-dimensional point cloud data includes at least one of classification information of the points or feature information of the points in the three-dimensional point cloud data.

In some embodiments, the three-dimensional point cloud processing model is implemented using a three-dimensional residual network. The three-dimensional point cloud processing model can simultaneously output a point-wise feature map $\boldsymbol{F^{3d}} \in \mathbb{R}^{N \times L}$ and a classification prediction probability $\boldsymbol{M^{3d}} \in \mathbb{R}^{N \times C}$ of the three-dimensional point cloud data, where N represents the number of points, L represents the dimensions of point features of the three-dimensional point cloud, and C represents the number of categories.

In step S104, information of pixels in two-dimensional image data is acquired, wherein the two-dimensional image data and the three-dimensional point cloud data cover a same area.

The two-dimensional image data includes data of several pixels, and the data of each of the pixels can include color information, of course, pixels can also be represented in other ways. In some embodiments, the two-dimensional image data is represented by $\mathbf{I} \in \mathbb{R}^{H \times W \times 3}$, where H×W represents the length times the width of the image, and 3 represents three color channels (e.g., red, green and blue channels).

Due to the difference of the acquisition devices, in some cases, the areas covered by the three-dimensional point cloud data and the two-dimensional image data may not be completely consistent. However, there is an intersection between the areas covered by the two.

In some embodiments, the information of the pixels in the two-dimensional image comprises at least one of classification information of the pixels or feature information of the pixels. The information type(s) of the two-dimensional image data can correspond to the information type(s) of the three-dimensional point cloud data, for example, both are feature information, both are classification information or both include feature information and classification information. Therefore, the three-dimensional point cloud data and the two-dimensional image data can be described from the perspective of features or semantics.

In some embodiments, the two-dimensional image data is processed using a two-dimensional image processing model to obtain information of the two-dimensional image data. Therefore, the efficiency of information acquisition can be improved. According to the needs, the two-dimensional image processing model can also be trained together with the three-dimensional point cloud processing model, thus improving the accuracy of prediction as a whole.

In some embodiments, the two-dimensional image processing model is implemented using a two-dimensional residual network. At the same time, a pixel-wise feature map $\boldsymbol{F}^{2d} \in \mathbb{R}^{H \times W \times D}$ and a classification prediction probability $\boldsymbol{M}^{2d} \in \mathbb{R}^{H \times W \times C}$ of the two-dimensional image are output, where H×W represents the length times the width of the image, that is, the number of pixels, D represents the dimensions of pixel features of the two-dimensional image, and C represents the number of categories of semantic segmentation.

In step S106, an alignment constraint loss between the three-dimensional point cloud data and the two-dimensional image data is determined using the information of the points and the information of the pixels.

Alignment constraint refers to the constraint of aligning the three-dimensional point cloud data with the two-dimensional image data. In some embodiments, the constraint can be performed based on the features of the points and the pixels, and can also be performed based on the semantics of the points and the pixels. In addition, the constraint can also be performed based on the global attributes (such as global features) of the three-dimensional point cloud and the two-dimensional image.

In some embodiments, a matching degree between the three-dimensional point cloud data and the two-dimensional image data is determined using the information of the points and the information of the pixels; and the alignment constraint loss is determined according to the matching degree. The alignment constraint loss is determined based on the matching degree of three-dimensional point cloud data and the two-dimensional image data, and training is performed, which can make the three-dimensional point cloud processing model align the three-dimensional point cloud data with the two-dimensional image data, for example, similar points and pixels are pulled closer, dissimilar points and pixels are pulled farther away, or the two are made to have the same semantics at corresponding positions as much as possible.

In some embodiments, the matching degree between the three-dimensional point cloud data and the two-dimensional image data comprises at least one of: a feature matching degree between the points in the three-dimensional point cloud data and the pixels in the two-dimensional image data, a matching degree of global features between the three-dimensional point cloud data and the two-dimensional image data, or a matching degree of semantic between the points in the three-dimensional point cloud data and the pixels in the two-dimensional image data. The following will exemplarily describe an embodiment of the determination method of these three constraints. According to the needs, those skilled in the art may also use other ways to determine the matching degree.

In step S108, a classification loss of the three-dimensional point cloud processing model is determined using classification information of the points in the three-dimensional point cloud data predicted by the three-dimensional point cloud processing model and pre-labeled scene classification information. That is, the greater the difference between the predicted value and the labeled value, the greater the classification loss.

The scene classification information is information describing the classification result of the whole scene. For example, if a scene includes a table and a chair, its classification information may include information corresponding to "tables" and "chairs". That is to say, in the embodiment of the present disclosure, before training the three-dimensional point cloud processing model, it is not necessary to label the three-dimensional point cloud data point by point, but to label it as a whole.

Since the predicted classification information is point-wise information, in order to correspond it with the scene classification information, the prediction result of the whole scene can be obtained through pooling processing, and the classification loss can be further calculated. Therefore, the workload of pre-labeling can be saved, and the training efficiency is improved as a whole.

In some embodiments, the classification loss is determined based on a cross entropy loss function. According to the needs, other methods can also be adopted to calculate the classification loss, which will not be described here.

In step S110, the three-dimensional point cloud processing model is trained using the alignment constraint loss and the classification loss.

In some embodiments, the three-dimensional point cloud processing model is trained using a weighted result of the alignment constraint loss and the classification loss. In a case that the alignment constraint loss includes multiple categories, or the classification loss includes multiple categories, each category may also correspond to a preset weight.

In some embodiments, in a case that the information of two-dimensional image data is obtained using a two-dimensional image processing model, the two-dimensional image processing model can also be trained using the classification loss of the two-dimensional image data. Therefore, the two-dimensional image processing model can give more accurate prediction results.

In the process of training the three-dimensional point cloud processing model, the embodiment of the present disclosure refers to the alignment constraint loss between the three-dimensional point cloud data and the two-dimensional image data, thereby introducing the two-dimensional image into the training process of the three-dimensional point cloud processing model, realizing the cross-modal guidance of the two-dimensional image to the three-dimensional point cloud, and improving the accuracy of model training.

The following exemplarily describes the manners for determining the alignment constraint based on three matching degrees respectively.

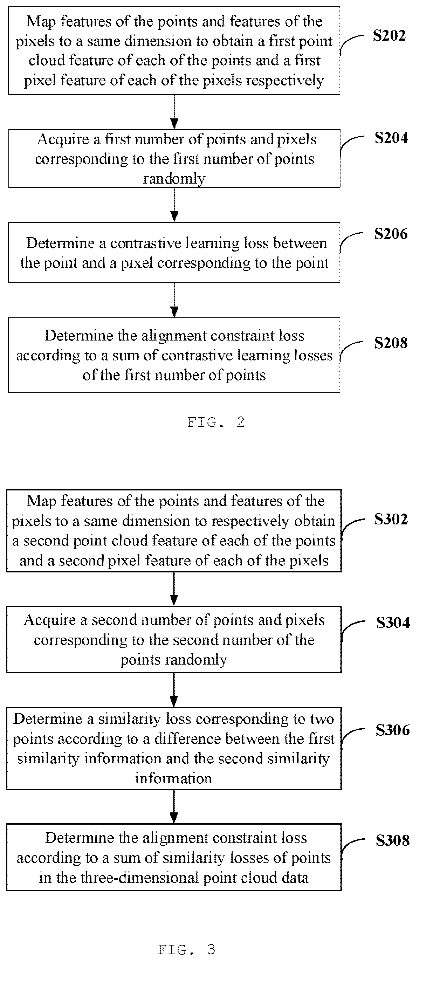

In some embodiments, the feature matching degree between the points and the pixels is determined according to the similarity between the point and the corresponding pixel. An embodiment of the alignment constraint loss determination method is described below with reference to FIG. 2.

FIG. 2 shows a flow schematic diagram of an alignment constraint loss determination method according to some embodiments of the present disclosure. As shown in FIG. 2, the alignment constraint loss determination method of this embodiment includes steps S202 to S208.

In step S202, features of the points and features of the pixels are mapped to a same dimension to obtain a first point cloud feature of each of the points and a first pixel feature of each of the pixels respectively.

For example, the features of the points and the features of the pixels are processed into new E-dimensional data. The mapping of points and the mapping of pixels can be realized through two fully connected layer networks respectively.

In step S204, a first number of points and pixels corresponding to the first number of points are acquired randomly.

The corresponding points and pixels can be determined in advance through means such as feature matching. For example, when a table corner is included in a scene, points corresponding to the table corner in the three-dimensional point cloud data and pixels corresponding to the table corner in the two-dimensional image data are the corresponding points and pixels.

In step S206, for each of the first number of points, a contrastive learning loss between the point and a pixel corresponding to the point is determined according to a similarity between the first point cloud feature of the point and the first pixel feature of the pixel corresponding to the point and a sum of similarities between the first point cloud feature of the point and the first pixel features of the pixels.

For ease of description, let the corresponding points and pixels have the same identifier, that is, the i-th point corresponds to the i-th pixel. Then for the i-th point, a contrastive learning loss between the i-th point and the i-th pixel is determined using a similarity between a first point cloud feature of the i-th point and a first pixel feature of the i-th pixel, and a sum of similarities between the first point cloud feature of the i-th point and first pixel features of the 1st, 2nd . . . $N_c$ (representing the first number) pixels.

In some embodiments, the contrastive learning loss between the point and the pixel corresponding to the point is negatively correlated with the similarity between the first point cloud feature of the point and the first pixel feature of the pixel corresponding to the point, and positively correlated with the sum of the similarities between the first point cloud feature of the point and the first pixel features of the pixels.

In step S208, the alignment constraint loss is determined according to a sum of contrastive learning losses of the first number of points. The alignment constraint loss is positively correlated with the sum of the contrastive learning losses.

Let the sum of the contrastive learning losses be "point-to-pixel contrastive loss". In some embodiments, the point-to-pixel contrastive loss $\mathcal{L}_c$ is determined according to Formula (1).

$$\mathcal{L}_c = -\sum_{i=1}^{N_c} \log \frac{\exp\left(F_c^{3d}(i) \cdot F_c^{2d}(i)/\tau\right)}{\sum_{k=1}^{N_c} \exp\left(F_c^{3d}(i) \cdot F_c^{2d}(k)/\tau\right)} \qquad (1)$$

Among them, $F_c^{3d}$ is the feature of the point in the three-dimensional point cloud data after mapping, $F_c^{2d}$ is the feature of the pixel in the two-dimensional image data after mapping, $N_c$ is the number of points and pixels, $\tau$ is a regulation parameter, i and k are identifiers of the point and pixel. The purpose of this loss function is to increase the feature similarity between the point and its corresponding pixel (positive sample), while reducing the similarity between the point and its non-corresponding pixel (negative sample). The regulation parameter controls the degree of attention that the loss function pays to difficult negative samples (negative samples with higher similarity). The larger the regulation parameter, the lower the degree of attention; the smaller the regulation parameter, the higher the degree of attention. In specific applications, appropriate regulation parameters can be selected through experiments.

Through the above embodiments, the features of the corresponding pixels and the features of the points are pulled closer, and the non-corresponding features are pulled farther away, thereby achieving the purpose of aligning the features of the points to the features of the image.

In some embodiments, the matching degree of global features is determined according to the similarity between any two points in the three-dimensional point cloud data and the similarity between any two pixels in the two-dimensional image data. An embodiment of an alignment constraint loss determination method is described below with reference to FIG. 3.

FIG. 3 shows a flow schematic diagram of an alignment constraint loss determination method according to other embodiments of the present disclosure. As shown in FIG. 3, the alignment constraint loss determination method of this embodiment includes steps S302 to S308.

In step S302, features of the points and features of the pixels are mapped to a same dimension to respectively obtain a second point cloud feature of each of the points and a second pixel feature of each of the pixels.

For example, the features of the points and the features of the pixels are both processed into new F-dimensional data. Point and pixel mapping can be implemented through two fully connected layer networks respectively. Step S302 may be step S202, or it may be additional processing performed outside of step S202. That is, E and F may be equal or unequal, and the fully connected layer network used in step S302 may be the same as or different from the fully connected layer network used in step S202.

In step S304, a second number of points and pixels corresponding to the second number of the points are randomly acquired. The second number may be the same as or different from the first number.

In step S306, for any two points of the second number of points, first similarity information between second point cloud features of the two points and second similarity information between second pixel features of two pixels corresponding to the two points of a second number of pixels are determined, and a similarity loss corresponding to the two points is determined according to a difference between the first similarity information and the second similarity information.

In some embodiments, the first similarity information and the second similarity information are similarity matrices. Similarity matrix describes the similarity between any two points or any two pixels, which can be regarded as a kind of global structural information.

In step S308, the alignment constraint loss is determined according to a sum of similarity losses of points in the three-dimensional point cloud data.

Let the sum of similarity losses be "global structural similarity loss". In some embodiments, the global structural similarity loss $\mathcal{L}_a$ is determined according to Equations (2)-(4).

$$A^{3d}(i,j) = \frac{F_a^{3d}(i) \cdot F_a^{3d}(j)}{\left\| F_a^{3d}(i) \right\|_2 \left\| F_a^{3d}(j) \right\|_2} \qquad (2)$$

$$A^{2d}(i,j) = \frac{F_a^{2d}(i) \cdot F_a^{2d}(j)}{\left\| F_a^{2d}(i) \right\|_2 \left\| F_a^{2d}(j) \right\|_2} \qquad (3)$$

$$\mathcal{L}_a = \frac{1}{N_a} \sum_{i=1}^{N_a} \sum_{j=1}^{N_a} \left\| A^{3d}(i,j) - A^{2d}(i,j) \right\|_2^2 \qquad (4)$$

Where $F_a^{3d}$ is the feature of the point in the three-dimensional point cloud data, $F_a^{2d}$ is the feature of the pixel in the two-dimensional image data, $A^{3d}(i,j)$ is the first similarity information, $A^{2d}(i,j)$ is the second similarity information, $N_a$ is the number of points and pixels, i, j and k are identifiers of the points and pixels.

Through the above embodiments, the processing model of three-dimensional point cloud can learn the global structural information of image features, thus realizing the alignment of the three-dimensional point cloud and the two-dimensional image at the global structural level.

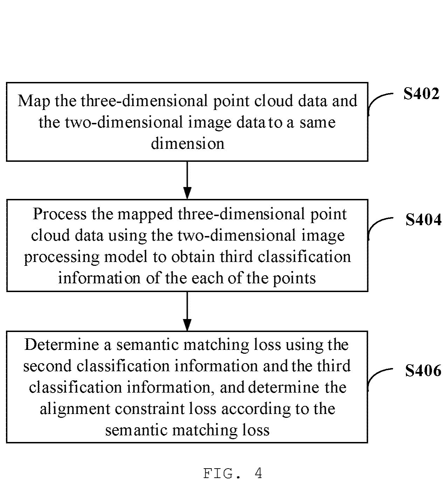

In some embodiments, the matching degree of semantic is determined according to first classification information of each of the points and second classification information of each of the pixels. The first classification information of each point can be determined by the output of the processing model of three-dimensional point cloud, and the second classification information of each pixel can be determined by the output of the processing model of two-dimensional image. An embodiment of the alignment constraint loss determination method is described below with reference to FIG. 4.

FIG. 4 shows a flow schematic diagram of an alignment constraint loss determination method according to further embodiments of the present disclosure. As shown in FIG. 4, the alignment constraint loss determination method of this embodiment includes steps S402 to S406.

In step S402, the three-dimensional point cloud data and the two-dimensional image data are mapped to a same dimension .

In step S404, the mapped three-dimensional point cloud data is processed using the two-dimensional image processing model to obtain third classification information of the each of the points.

In step S406, a semantic matching loss is determined using the second classification information and the third classification information, and the alignment constraint loss is determined according to the semantic matching loss.

In some embodiments, the alignment constraint loss is positively correlated with the second classification information and negatively correlated with the third classification information.

In some embodiments, the semantic matching loss $\mathcal{L}_m$ is determined according to Equation (5).

$$\mathcal{L}_m = -\frac{1}{N}\sum_{i=1}^{N}\sum_{c=1}^{C} M^{2d}(i,c) \log \frac{M^{2d}(i,c)}{\hat{M}^{3d}(i,c)} \qquad (5)$$

Where N represents the number of points, C represents the number of categories, $M^{2d}(i,c)$ represents a prediction result of the two-dimensional image processing model for pixels in the two-dimensional image data, $\hat{M}^{3d}(i, c)$ represents a prediction result of the two-dimensional image processing model for points in the mapped three-dimensional point cloud data.

Through the above embodiments, the three-dimensional point cloud processing model can learn the semantic information of image features, so as to achieve alignment at the semantic level.

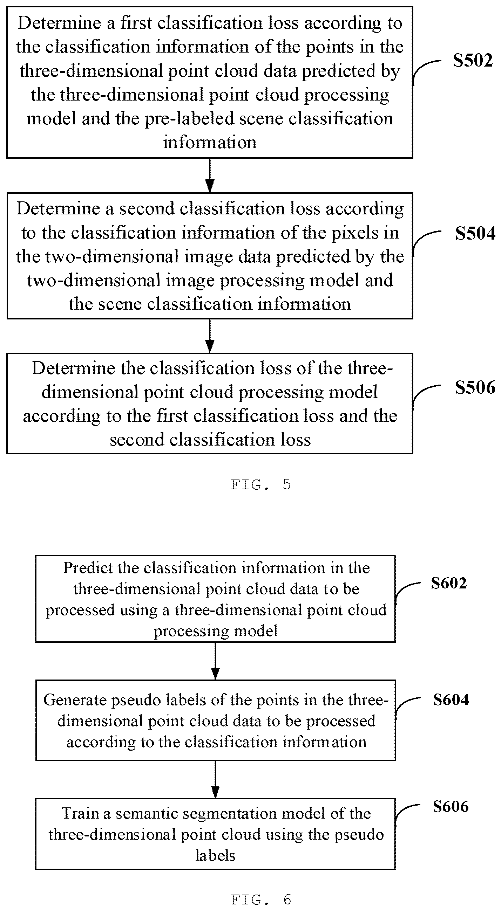

When using the two-dimensional image processing model to obtain the information of two-dimensional image data, the classification loss of the two-dimensional image processing model can also be considered when determining the classification loss. An embodiment of a classification loss determination method of the present disclosure is described below with reference to FIG. 5.

FIG. 5 shows a flow schematic diagram of a classification loss determination method according to some embodiments of the present disclosure. As shown in FIG. 5, the classification loss determination method of this embodiment includes steps S502 to S506.

In step S502, a first classification loss is determined according to the classification information of the points in the three-dimensional point cloud data predicted by the three-dimensional point cloud processing model and the pre-labeled scene classification information.

In step S504, a second classification loss is determined according to the classification information of the pixels in the two-dimensional image data predicted by the two-dimensional image processing model and the scene classification information.

Since the three-dimensional point cloud data and the two-dimensional image data cover the same area, i.e., they are for the same scene, the two can share the pre-labeled scene classification information.

In step S506, the classification loss of the three-dimensional point cloud processing model is determined according to the first classification loss and the second classification loss.

In some embodiments, the classification information is a classification probability. The classification loss includes a first classification loss determined according to the classification information of the three-dimensional point cloud data after global average pooling and the scene classification information, and a second classification loss determined according to the classification information after global average pooling and the scene classification information.

For example, the classification information after pooling can be calculated by Formulas (6) and (7), where $Z^{3d}$ represents the classification information predicted by the three-dimensional point cloud processing model after pooling, $M^{3d}(n)$ represents the classification information predicted by the three-dimensional point cloud processing model before pooling, $Z^{2d}$ represents the classification information predicted by the two-dimensional image processing model after pooling, $M^{2d}(h, w)$ represents the classification information predicted by the two-dimensional image processing model before pooling, and N represents the number of points in the three-dimensional point cloud, H and W respectively represent the length and width of the two-dimensional image.

9

$$Z^{3d} = \frac{1}{N}\sum_{n=1}^{N} M^{3d}(n) \qquad\qquad (6)$$

$$Z^{2d} = \frac{1}{HW}\sum_{h=1}^{H}\sum_{w=1}^{W} M^{2d}(h,w) \qquad\qquad (7)$$

Then, the first classification loss $\mathcal{L}_{cls}^{3d}$ and the second classification loss $\mathcal{L}_{cls}^{2d}$ may be calculated according to Formulas (8) and (9), where C represents the number of categories, c represents a category identifier, $Y_c$ represents a multi-category classification label of the scene, and σ represents a sigmoid activation function.

$$\mathcal{L}_{cls}^{3d} = -\frac{1}{C}\sum_{c=1}^{C}[Y_c \cdot \log \sigma(Z_c^{3d}) + (1 - Y_c) \cdot \log(1 - \sigma(Z_c^{3d}))] \qquad (8)$$

$$\mathcal{L}_{cls}^{2d} = -\frac{1}{C}\sum_{c=1}^{C}[Y_c \cdot \log \sigma(Z_c^{2d}) + (1 - Y_c) \cdot \log(1 - \sigma(Z_c^{2d}))] \qquad (9)$$

Through the above embodiments, the classification accuracy of the two-dimensional image processing model can be considered in addition to the classification accuracy of the three-dimensional point cloud processing model when calculating the classification loss, so that the influence of the two-dimensional image processing model on the prediction result is considered, which further improves the training effect of the three-dimensional point cloud processing model.

After completing the training of the three-dimensional point cloud processing model, it can be applied to the training of a three-dimensional point cloud semantic segmentation model. An embodiment of a training method of a semantic segmentation model of a three-dimensional point cloud is described below with reference to FIG. 6.

FIG. 6 shows a flow schematic diagram of a training method of a semantic segmentation model of a three-dimensional point cloud according to some embodiments of the present disclosure. As shown in FIG. 6, the training method of this embodiment includes steps S602 to S606.

In step S602, the classification information in the three-dimensional point cloud data to be processed is predicted using a three-dimensional point cloud processing model.

The three-dimensional point cloud processing model is trained using the method in any one of the previous embodiments.

In step S604, pseudo labels of the points in the three-dimensional point cloud data to be processed are generated according to the classification information. Each pseudo label indicates a category of the point.

In step S606, a semantic segmentation model of the three-dimensional point cloud is trained using the pseudo labels. That is, the prediction result of the three-dimensional point cloud processing model is taken as the label information of the training data, and the semantic segmentation model is further trained using the training data.

In some embodiments, when generating pseudo-label categories, for input point cloud $\mathbf{P} \in \mathbb{R}^{N\times 6}$, first the classification probability $M^{3d} \in \mathbb{R}^{N\times C}$ of each point is obtained through the three-dimensional point cloud processing model, then the category having the largest predicted probability among C categories is selected for each point as the pseudo-label to obtain a point-wise pseudo-label $\widetilde{Y} \in \mathbb{R}^{N}$, which is then used as a supervisory signal to train the semantic segmentation model.

In some embodiments, a cross entropy loss is used to train a three-dimensional U-Net segmentation model based on the three-dimensional residual network. According to the needs, other types of semantic segmentation networks can also be trained, or the trained three-dimensional point cloud processing model can be applied to other weakly supervised learning tasks of three-dimensional point clouds.

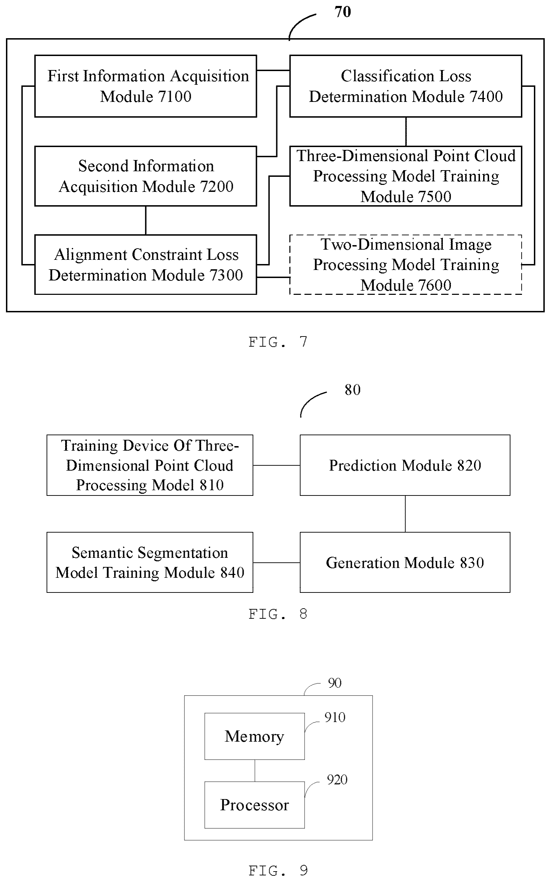

An embodiment of a training device for a three-dimensional point cloud processing model is described below with reference to FIG. 7.

FIG. 7 shows a structural schematic diagram of a training device of a three-dimensional point cloud processing model according to some embodiments of the present disclosure. As shown in FIG. 7, a training device 700 of the three-dimensional point cloud processing model of this embodiment comprises: a first information acquisition module 7100 configured for processing three-dimensional point cloud data using a three-dimensional point cloud processing model to acquire information of points in the three-dimensional point cloud data; a second information acquisition module 7200 configured for acquiring information of pixels in two-dimensional image data, wherein the two-dimensional image data and the three-dimensional point cloud data cover a same area; an alignment constraint loss determination module 7300 configured for determining an alignment constraint loss between the three-dimensional point cloud data and the two-dimensional image data using the information of the points and the information of the pixels; a classification loss determination module 7400 configured for determining a classification loss of the three-dimensional point cloud processing model using classification information of the points in the three-dimensional point cloud data predicted by the three-dimensional point cloud processing model and pre-labeled scene classification information; and a three-dimensional point cloud processing model training module 7500 configured for training the three-dimensional point cloud processing model using the alignment constraint loss and the classification loss.

In some embodiments, the information of the points comprises at least one of classification information of the points or feature information of the points; and the information of the pixels comprises at least one of classification information of the pixels or feature information of the pixels.

In some embodiments, the alignment constraint loss determination module 7300 is further configured for determining a matching degree between the three-dimensional point cloud data and the two-dimensional image data using the information of the points and the information of the pixels; and determining the alignment constraint loss according to the matching degree.

In some embodiments, the matching degree comprises at least one of a matching degree of features between the points and the pixels, a matching degree of global features between the three-dimensional point cloud data and the two-dimensional image data, or a matching degree of semantic between the points and the pixels.

In some embodiments, the matching degree of features between the points and the pixels is determined according to a similarity between the points and corresponding pixels.

In some embodiments, the alignment constraint loss determination module 7300 is further configured for: mapping features of the points and features of the pixels to a same dimension to obtain a first point cloud feature of each of the points and a first pixel feature of each of the pixels respectively; randomly acquiring a first number of points and pixels corresponding to the first number of points; for each of the first number of points, determining a contrastive learning loss between the point and a pixel corresponding to the point according to a similarity between the first point cloud feature of the point and the first pixel feature of the pixel corresponding to the point and a sum of similarities between the first point cloud feature of the point and the first pixel features of the pixels; and determining the alignment constraint loss according to a sum of contrastive learning losses of the first number of points.

In some embodiments, for each of the first number of points, the contrastive learning loss between the point and the pixel corresponding to the point is negatively correlated with the similarity between the first point cloud feature of the point and the first pixel feature of the pixel corresponding to the point, and positively correlated with the sum of the similarities between the first point cloud feature of the point and the first pixel features of the pixels.

In some embodiments, the matching degree of global features is determined according to a similarity between any two points in the three-dimensional point cloud data and a similarity between any two pixels in the two-dimensional image data.

In some embodiments, the alignment constraint loss determination module 7300 is further configured for: in a case that the matching degree comprises the matching degree of global features, mapping features of the points and features of the pixels to a same dimension to respectively obtain a second point cloud feature of each of the points and a second pixel feature of each of the pixels; randomly acquiring a second number of points and pixels corresponding to the second number of the points; for any two points of the second number of points, determining first similarity information between second point cloud features of the two points and second similarity information between second pixel features of two pixels corresponding to the two points of a second number of pixels, and determining a similarity loss corresponding to the two points according to a difference between the first similarity information and the second similarity information; and determining the alignment constraint loss according to a sum of similarity losses of points in the three-dimensional point cloud data.

In some embodiments, the first similarity information and the second similarity information are similarity matrices.

In some embodiments, the matching degree of semantic is determined according to first classification information of each of the points and second classification information of each of the pixels.

In some embodiments, the second classification information is obtained by processing the each of the pixels using a two-dimensional image processing model, and the alignment constraint loss determination module 7300 is further configured for: mapping the three-dimensional point cloud data and the two-dimensional image data to a same dimension ; processing the mapped three-dimensional point cloud data using the two-dimensional image processing model to obtain third classification information of the each of the points; and determining a semantic matching loss using the second classification information and the third classification information, and determining the alignment constraint loss according to the semantic matching loss.

In some embodiments, the alignment constraint loss is positively correlated with the second classification information and negatively correlated with the third classification information.

In some embodiments, the second information acquisition module 7200 is further configured for processing the two-dimensional image data using a two-dimensional image processing model to acquire the information of the two-dimensional image data.

In some embodiments, the classification loss determination module 7400 is further configured for determining a first classification loss according to the classification information of the points in the three-dimensional point cloud data predicted by the three-dimensional point cloud processing model and the pre-labeled scene classification information; determining a second classification loss according to the classification information of the pixels in the two-dimensional image data predicted by the two-dimensional image processing model and the scene classification information; and determining the classification loss of the three-dimensional point cloud processing model according to the first classification loss and the second classification loss.

In some embodiments, the classification loss determination module 7400 is further configured for: determining the first classification loss according to a pooling processing result of the classification information of the three-dimensional point cloud data predicted by the three-dimensional point cloud processing model and the scene classification information; and determining the second classification loss according to the classification information of the pixels in the two-dimensional image data predicted by the two-dimensional image processing model and the scene classification information.

In some embodiments, the training device 700 further comprises a two-dimensional image processing model training module 7600 configured for training the two-dimensional image processing model using the alignment constraint loss and the classification loss.

In some embodiments, the three-dimensional point cloud processing model training module 7500 is further configured for training the three-dimensional point cloud processing model using a weighted result of the alignment constraint loss and the classification loss.

In some embodiments, the three-dimensional point cloud processing model is implemented using a three-dimensional residual network.

In some embodiments, the two-dimensional image processing model is implemented using a two-dimensional residual network.

An embodiment of a training system for a semantic segmentation model is described below with reference to FIG. 8.

FIG. 8 shows a schematic structural diagram of a training system of a semantic segmentation model according to some embodiments of the present disclosure. As shown in FIG. 8, a training system 80 of a semantic segmentation model of this embodiment comprises: a training device 810 of a three-dimensional point cloud processing model, the specific implementation of which can refer to any embodiment of the present disclosure; a prediction module 820 configured for predicting classification information in three-dimensional point cloud data to be processed using the three-dimensional point cloud processing model; a generation module 830 configured for generating pseudo labels of points in the three-dimensional point cloud data to be processed according to the classification information; a semantic segmentation model training module 840 configured for training a semantic segmentation model of three-dimensional point cloud using the pseudo labels.

FIG. 9 shows a structural schematic diagram of a training device of a three-dimensional point cloud processing model according to other embodiments of the present disclosure. As shown in FIG. 9, a training device 90 of a three-dimensional point cloud processing model of this embodiment comprises: a memory 910, and a processor 920 coupled to the memory 910, the processor 920 being configured to execute the training method of the three-dimensional point cloud processing model in any of the foregoing embodiments based on instructions stored in the memory 910.

The memory 910 may include, for example, a system memory, a fixed nonvolatile storage medium, and the like. The system memory stores, for example, an operating system, application programs, a Boot Loader and other programs.

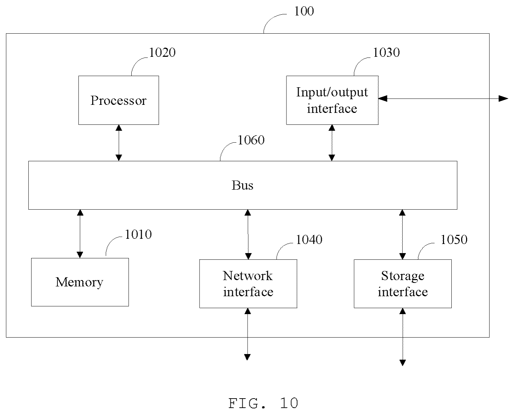

FIG. 10 shows a structural schematic diagram of a training device of a three-dimensional point cloud processing model according to still other embodiments of the present disclosure. As shown in FIG. 10, the training device 100 of the three-dimensional point cloud processing model of this embodiment includes a memory 1010 and a processor 1020, and may also include an input-output interface 1030, a network interface 1040, a storage interface 1050, and the like. These interfaces 1030, 1040, 1050 and the memory 1010 and the processor 1020 can be connected by a bus 1060, for example. The input-output interface 1030 provides a connection interface for input-output devices such as a display, a mouse, a keyboard and a touch screen. The network interface 1040 provides a connection interface for various networked devices. The storage interface 1050 provides a connection interface for external storage devices such as SD cards and USB flash drives.

The embodiment of the present disclosure also provides a computer-readable storage medium, on which a computer program is stored, characterized in that the program, when executed by a processor, implements any of the aforementioned training methods of the three-dimensional point cloud processing model.

It should be understood by those skilled in the art that embodiments of the present disclosure can be provided as a method, a system, or a computer program product. Therefore, the present disclosure can take the form of an entirely hardware embodiment, an entirely software embodiment, or an embodiment combining software and hardware aspects. Furthermore, the present disclosure may take the form of a computer program product embodied on one or more computer-usable non-transitory storage media (including but not limited to disk storage, CD-ROM, optical storage, etc.) in which computer-usable program codes are included.

The present disclosure is described with reference to flow diagrams and/or block diagrams of methods, devices (systems), and computer program products according to embodiments of the present disclosure. It can be understood as that each flow and/or block in the flow diagrams and/or block diagrams, and combinations of the flow and/or block in the flow diagrams and/or block diagrams can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing devices produce a means for implementing the functions specified in one or more flows of the flow diagrams or flows and/or one or more block diagrams in the block diagram.

These computer program instructions may also be stored in a computer-readable memory that can direct a computer or other programmable data processing apparatus to function in a particular manner, such that the instructions stored in the computer-readable memory produce an article of manufacture including an instruction means that implements the functions specified in one or more flow diagrams and/or block diagrams.

These computer program instructions may also be loaded onto a computer or other programmable data processing apparatus, such that a series of operational steps are performed on the computer or other programmable apparatus to produce a computer-implemented process, such that the instructions executed on the computer or other programmable apparatus provide steps for implementing the functions specified in one or more flows of the flow diagrams and/or one or more blocks of the block diagrams.

The above contents are only preferred embodiments of the present disclosure, but are not used to limit the present disclosure. Any modification, equivalent replacement, improvement and etc. within spirit and principles of the present disclosure shall be contained in the protection scope of the present disclosure.

**Claims**

1. A training method of three-dimensional point cloud processing model, comprising:

   processing three-dimensional point cloud data using a three-dimensional point cloud processing model to acquire information of points in the three-dimensional point cloud data;
   acquiring information of pixels in two-dimensional image data, wherein the two-dimensional image data and the three-dimensional point cloud data cover a same area;
   determining an alignment constraint loss between the three-dimensional point cloud data and the two-dimensional image data using the information of the points and the information of the pixels;
   determining a classification loss of the three-dimensional point cloud processing model using classification information of the points in the three-dimensional point cloud data predicted by the three-dimensional point cloud processing model and pre-labeled scene classification information; and
   training the three-dimensional point cloud processing model using the alignment constraint loss and the classification loss.

2. The training method according to claim 1, wherein:

   the information of the points comprises at least one of classification information of the points or feature information of the points; and
   the information of the pixels comprises at least one of classification information of the pixels or feature information of the pixels.

3. The training method according to claim 1 or 2, wherein the determining the alignment constraint loss between the three-dimensional point cloud data and the two-dimensional image data using the information of the points and the information of the pixels comprises:

   determining a matching degree between the three-dimensional point cloud data and the two-dimensional image data using the information of the points and the information of the pixels; and
   determining the alignment constraint loss according to the matching degree.

4. The training method according to claim 3, wherein the matching degree comprises at least one of a matching degree of features between the points and the pixels, a matching degree of global features between the three-dimensional point cloud data and the two-dimensional image data, or a matching degree of semantic between the points and the pixels.

5. The training method according to claim 4, wherein the matching degree of features between the points and the pixels is determined according to a similarity between the points and corresponding pixels.

6. The training method according to claim 5, wherein, in a case that the matching degree comprises the matching degree of features between the points and the pixels, the determining the alignment constraint loss according to the matching degree comprises:

mapping features of the points and features of the pixels to a same dimension to obtain a first point cloud feature of each of the points and a first pixel feature of each of the pixels respectively;
randomly acquiring a first number of points and pixels corresponding to the first number of points;
for each of the first number of points, determining a contrastive learning loss between the point and a pixel corresponding to the point according to a similarity between the first point cloud feature of the point and the first pixel feature of the pixel corresponding to the point and a sum of similarities between the first point cloud feature of the point and the first pixel features of the pixels; and
determining the alignment constraint loss according to a sum of contrastive learning losses of the first number of points.

7. The training method according to claim 6, wherein for each of the first number of points, the contrastive learning loss between the point and the pixel corresponding to the point is negatively correlated with the similarity between the first point cloud feature of the point and the first pixel feature of the pixel corresponding to the point, and positively correlated with the sum of the similarities between the first point cloud feature of the point and the first pixel features of the pixels.

8. The training method according to any one of claims 4 to 7, wherein the matching degree of global features is determined according to a similarity between any two points in the three-dimensional point cloud data and a similarity between any two pixels in the two-dimensional image data.

9. The training method according to claim 8, wherein in a case that the matching degree comprises the matching degree of global features, the determining the alignment constraint loss according to the matching degree comprises:

mapping features of the points and features of the pixels to a same dimension to respectively obtain a second point cloud feature of each of the points and a second pixel feature of each of the pixels;
randomly acquiring a second number of points and pixels corresponding to the second number of the points;
for any two points of the second number of points, determining first similarity information between second point cloud features of the two points and second similarity information between second pixel features of two pixels corresponding to the two points of a second number of pixels, and determining a similarity loss corresponding to the two points according to a difference between the first similarity information and the second similarity information; and
determining the alignment constraint loss according to a sum of similarity losses of points in the three-dimensional point cloud data.

10. The training method according to claim 9, wherein the first similarity information and the second similarity information are similarity matrices.

11. The training method according to any one of claims 4 to 10, wherein the matching degree of semantic is determined according to first classification information of each of the points and second classification information of each of the pixels.

12. The training method according to claim 11, wherein the second classification information is obtained by processing the each of the pixels using a two-dimensional image processing model, and in a case that the matching degree comprises the matching degree of semantic, the determining the alignment constraint loss according to the matching degree comprises:

mapping the three-dimensional point cloud data and the two-dimensional image data to a same dimension ;
processing the mapped three-dimensional point cloud data using the two-dimensional image processing model to obtain third classification information of the each of the points; and
determining a semantic matching loss using the second classification information and the third classification information, and determining the alignment constraint loss according to the semantic matching loss.

**13.** The training method according to claim 12, wherein the alignment constraint loss is positively correlated with the second classification information and negatively correlated with the third classification information.

**14.** The training method according to any one of claims 1 to 13, wherein the acquiring the information of the two-dimensional image data comprises:
processing the two-dimensional image data using a two-dimensional image processing model to acquire the information of the two-dimensional image data.

**15.** The training method according to claim 14, wherein the determining the classification loss of the three-dimensional point cloud processing model using the classification information of the points in the three-dimensional point cloud data predicted by the three-dimensional point cloud processing model and the pre-labeled scene classification information comprises:

determining a first classification loss according to the classification information of the points in the three-dimensional point cloud data predicted by the three-dimensional point cloud processing model and the pre-labeled scene classification information;
determining a second classification loss according to the classification information of the pixels in the two-dimensional image data predicted by the two-dimensional image processing model and the scene classification information; and
determining the classification loss of the three-dimensional point cloud processing model according to the first classification loss and the second classification loss.

**16.** The training method according to claim 15, wherein:

the first classification loss is determined according to a pooling processing result of the classification information of the three-dimensional point cloud data predicted by the three-dimensional point cloud processing model and the scene classification information; and
the second classification loss is determined according to the classification information of the pixels in the two-dimensional image data predicted by the two-dimensional image processing model and the scene classification information.

**17.** The training method according to any one of claims 1 to 16, wherein the three-dimensional point cloud processing model is trained using a weighted result of the alignment constraint loss and the classification loss.

**18.** The training method according to any one of claims 1 to 17, wherein the three-dimensional point cloud processing model is implemented using a three-dimensional residual network.

**19.** The training method according to any one of claims 14 to 18, wherein the two-dimensional image processing model is implemented using a two-dimensional residual network.

**20.** A training method of semantic segmentation model, comprising:

predicting classification information in three-dimensional point cloud data to be processed using a three-dimensional point cloud processing model, wherein the three-dimensional point cloud processing model is trained using the training method of a three-dimensional point cloud processing model according to any one of claims 1 to 19;
generating pseudo labels of points in the three-dimensional point cloud data to be processed according to the classification information; and
training a semantic segmentation model of three-dimensional point cloud using the pseudo labels.

**21.** A training device of three-dimensional point cloud processing model, comprising:

a first information acquisition module configured for processing three-dimensional point cloud data using a three-dimensional point cloud processing model to acquire information of points in the three-dimensional point cloud data;
a second information acquisition module configured for acquiring information of pixels in two-dimensional image data, wherein the two-dimensional image data and the three-dimensional point cloud data cover a same area;
an alignment constraint loss determination module configured for determining an alignment constraint loss between the three-dimensional point cloud data and the two-dimensional image data using the information of the points and the information of the pixels;

a classification loss determination module configured for determining a classification loss of the three-dimensional point cloud processing model using classification information of the points in the three-dimensional point cloud data predicted by the three-dimensional point cloud processing model and pre-labeled scene classification information; and

a three-dimensional point cloud processing model training module configured for training the three-dimensional point cloud processing model using the alignment constraint loss and the classification loss.

22. A training device of three-dimensional point cloud processing model, comprising:

a memory; and
a processor coupled to the memory, the processor being configured to, based on instructions stored in the memory, perform the training method of three-dimensional point cloud processing model according to any one of claims 1 to 19.

23. A training system for a semantic segmentation model, comprising:

the training device of a three-dimensional point cloud processing model according to claim 21 or 22;
a prediction module configured for predicting classification information in three-dimensional point cloud data to be processed using the three-dimensional point cloud processing model;
a generation module configured for generating pseudo labels of points in the three-dimensional point cloud data to be processed according to the classification information; and
a semantic segmentation model training module configured for training a semantic segmentation model of three-dimensional point cloud using the pseudo labels.

24. A computer-readable storage medium having stored thereon a computer program, which, when executed by a processor, implements the training method of three-dimensional point cloud processing model according to any one of claims 1 to 19.

25. A computer program comprising:
instructions that, when executed by a processor, cause the processor to perform the training method of a three-dimensional point cloud processing model according to any one of claims 1 to 19.

| Process three-dimensional point cloud data using a three-dimensional point cloud processing model to acquire information of points in the three-dimensional point cloud data | S102 |

↓

| Acquire information of pixels in two-dimensional image data | S104 |

↓

| Determine an alignment constraint loss between the three-dimensional point cloud data and the two-dimensional image data using the information of the points and the information of the pixels | S106 |

↓

| Determine a classification loss of the three-dimensional point cloud processing model using classification information of the points in the three-dimensional point cloud data predicted by the three-dimensional point cloud processing model and pre-labeled scene classification information | S108 |

↓

| Train the three-dimensional point cloud processing model using the alignment constraint loss and the classification loss | S110 |

FIG. 1

Map features of the points and features of the pixels to a same dimension to obtain a first point cloud feature of each of the points and a first pixel feature of each of the pixels respectively — S202

Acquire a first number of points and pixels corresponding to the first number of points randomly — S204

Determine a contrastive learning loss between the point and a pixel corresponding to the point — S206

Determine the alignment constraint loss according to a sum of contrastive learning losses of the first number of points — S208

FIG. 2

Map features of the points and features of the pixels to a same dimension to respectively obtain a second point cloud feature of each of the points and a second pixel feature of each of the pixels — S302

Acquire a second number of points and pixels corresponding to the second number of the points randomly — S304

Determine a similarity loss corresponding to two points according to a difference between the first similarity information and the second similarity information — S306

Determine the alignment constraint loss according to a sum of similarity losses of points in the three-dimensional point cloud data — S308

FIG. 3

Map the three-dimensional point cloud data and the two-dimensional image data to a same dimension — S402

Process the mapped three-dimensional point cloud data using the two-dimensional image processing model to obtain third classification information of the each of the points — S404

Determine a semantic matching loss using the second classification information and the third classification information, and determine the alignment constraint loss according to the semantic matching loss — S406

FIG. 4

Determine a first classification loss according to the classification information of the points in the three-dimensional point cloud data predicted by the three-dimensional point cloud processing model and the pre-labeled scene classification information ⌐ S502

Determine a second classification loss according to the classification information of the pixels in the two-dimensional image data predicted by the two-dimensional image processing model and the scene classification information ⌐ S504

Determine the classification loss of the three-dimensional point cloud processing model according to the first classification loss and the second classification loss ⌐ S506

FIG. 5

Predict the classification information in the three-dimensional point cloud data to be processed using a three-dimensional point cloud processing model ⌐ S602

Generate pseudo labels of the points in the three-dimensional point cloud data to be processed according to the classification information ⌐ S604

Train a semantic segmentation model of the three-dimensional point cloud using the pseudo labels ⌐ S606

FIG. 6

70

| First Information Acquisition Module 7100 | Classification Loss Determination Module 7400 |
|---|---|
| Second Information Acquisition Module 7200 | Three-Dimensional Point Cloud Processing Model Training Module 7500 |
| Alignment Constraint Loss Determination Module 7300 | Two-Dimensional Image Processing Model Training Module 7600 |

FIG. 7

80

| Training Device Of Three-Dimensional Point Cloud Processing Model 810 | Prediction Module 820 |
|---|---|
| Semantic Segmentation Model Training Module 840 | Generation Module 830 |

FIG. 8

90

910

Memory

920

Processor

FIG. 9

FIG. 10

## INTERNATIONAL SEARCH REPORT

| International application No. |
|---|
| **PCT/CN2024/082639** |

**A.   CLASSIFICATION OF SUBJECT MATTER**

G06V10/774(2022.01)i;  G06T17/20(2006.01)i

According to International Patent Classification (IPC) or to both national classification and IPC

**B.   FIELDS SEARCHED**

Minimum documentation searched (classification system followed by classification symbols)

IPC:G06V, G06T

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 三维点云, 二维图像, 覆盖, 区域, 模型, 像素, 对齐, 约束, 损失, three dimensional point cloud, two dimensional image, cover, area, model, pixel, alignment, constraint, loss

**C.   DOCUMENTS CONSIDERED TO BE RELEVANT**

| Category* | Citation of document, with indication, where appropriate, of the relevant passages | Relevant to claim No. |
|---|---|---|
| A | CN 114155265 A (NANJING FORESTRY UNIVERSITY) 08 March 2022 (2022-03-08)<br>entire document | 1-25 |
| A | CN 114298168 A (TSINGHUA UNIVERSITY) 08 April 2022 (2022-04-08)<br>entire document | 1-25 |
| A | CN 111754636 A (BEIJING BAIDU NETCOM SCIENCE AND TECHNOLOGY CO., LTD.)<br>09 October 2020 (2020-10-09)<br>entire document | 1-25 |
| A | US 10650278 B1 (APPLE INC. et al.) 12 May 2020 (2020-05-12)<br>entire document | 1-25 |
| PX | CN 116563666 A (JINGDONG TECHNOLOGY INFORMATION TECHNOLOGY CO.,<br>LTD.) 08 August 2023 (2023-08-08)<br>entire document | 1-25 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 June 2024** | **13 June 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082639**

| Patent document cited in search report | | | Publication date (day/month/year) | Patent family member(s) | | | Publication date (day/month/year) |
|---|---|---|---|---|---|---|---|
| CN | 114155265 | A | 08 March 2022 | None | | | |
| CN | 114298168 | A | 08 April 2022 | None | | | |
| CN | 111754636 | A | 09 October 2020 | CN | 111754636 | B | 25 July 2023 |
| US | 10650278 | B1 | 12 May 2020 | US | 10936908 | B1 | 02 March 2021 |
| | | | | US | 11580328 | B1 | 14 February 2023 |
| CN | 116563666 | A | 08 August 2023 | None | | | |

Form PCT/ISA/210 (patent family annex) (July 2022)

**REFERENCES CITED IN THE DESCRIPTION**

**Patent documents cited in the description**

- CN 202310518670